# EUROPEAN PATENT APPLICATION

(11) **EP 3 772 451 A1**
(43) Date of publication of application: **10.02.2021**
(21) Application number: 19204966.6
(22) Date of filing: 23.10.2019
(51) Int. Cl.: B62K 27/12, A61G 5/10, F16B 2/04

(54) **QUICK-RELEASE MECHANISM**

(30) Priority: 09.08.2019 TW 108128432
(71) Applicant: Li Yuan Transmission Co., Ltd., Caotun Township, Nantou County (TW)
(72) Inventor: Tang, Han-Wei, Linluo Township, Pingtung County (TW); Ko, Keng-Yu, Caotun Township, Nantou County (TW); Lin, Ze-Chen, Linluo Township, Pingtung County (TW)
(74) Representative: Lang, Christian

(57) **Abstract**

A quick-release mechanism includes a first connecting member (1) and a second connecting member (2). The first connecting member (1) includes an engaging portion (11) and a hole (13). The second connecting member (2) includes a coupling portion (21) and an extension (23). The extension (23) extends through the hole (13) of the first connecting member (1) to engage the coupling portion (21) with the engaging portion (11). The extension (23) includes a limiting groove (24). The second connecting member (2) further includes a limiting member (25) having a limiting portion (252). The limiting member (25) is extendible into or retractable from the limiting groove (24) to move the limiting portion (252) towards or away from the coupling portion (21).

## Description

### BACKGROUND OF THE INVENTION

### 1. Field of the Invention

The present invention relates to a quick-release mechanism and, more particularly, to a quick-release mechanism including mutually coupled components.

### 2. Description of the Related Art

To achieve convenience in use or carriage, current various commodities generally include a detachable structure to allow easy modularized expansion or detachment for storage purposes. For example, lamps and mobile phone supports are added to bicycles, or auxiliary wheels are added to carriers. However, conventional detachable structures are complicated and require troublesome procedures for coupling or release, and additional tools are required for locking or detachment in some cases, leading to much inconvenience to users.

### SUMMARY OF THE INVENTION

To solve the above problems, an objective of the present invention is to provide a quick-release mechanism to allow easy coupling and detachment.

When the terms "front", "rear", "left", "right", "up", "down", "top", "bottom", "inner", "outer", "side", and similar terms are used herein, it should be understood that these terms have reference only to the structure shown in the drawings as it would appear to a person viewing the drawings and are utilized only to facilitate describing the invention, rather than restricting the invention.

As used herein, the term "one" or "an" for describing the number of the elements and members of the present invention is used for convenience, provides the general meaning of the scope of the present invention, and should be interpreted to include one or at least one. Furthermore, unless explicitly indicated otherwise, the concept of a single component also includes the case of plural components.

As used herein, the term "coupling", "join", "assembly", or similar terms is used to include separation of connected members without destroying the members after connection or inseparable connection of the members after connection. A person having ordinary skill in the art would be able to select according to desired demands in the material or assembly of the members to be connected.

A quick-release mechanism according to the present invention comprises a first connecting member and a second connecting member. The first connecting member includes an engaging portion and a hole. The second connecting member includes a coupling portion and an extension. The extension extends through the hole of the first connecting member to engage the coupling portion with the engaging portion. The extension includes a limiting groove. The second connecting member further includes a limiting member having a limiting portion. The limiting member is extendible into or retractable from the limiting groove to move the limiting portion towards or away from the coupling portion.

Thus, the quick-release mechanism according to the present invention include the first and second connecting members respectively mounted to two objects requiring detachable coupling. The first and second connecting members couple with each other. The detachment of the first and second connecting members can be controlled by pressing and elastic returning of the limiting member of the second connecting member. Coupling and detaching of the first and second connecting members can be simply achieved without additional locking tools, improving use convenience.

In an example, the first connecting member includes an abutting portion, and the hole is defined between the engaging portion and the abutting portion. Thus, the second connecting member can extend and engage with the hole, and the engaging portion and the abutting portion together position the second connecting member, securely engaging the second connecting member with the first connecting member.

In an example, the first connecting member further includes an auxiliary abutting portion adjacent to the abutting portion, and the auxiliary abutting portion and the abutting portion together abut against the second connecting member. Thus, the engaging stability of the second connecting member is improved.

In an example, the engaging portion and the abutting portion are pivotably connected to the first connecting member. Thus, insertion of the second connecting member can be guided, improving the smoothness of inserting the second connecting member into the hole of the first connecting member.

In an example, the coupling portion includes a recess having an opening facing an extending direction of the extension. Thus, the recess can couple with the engaging portion of the first connecting member, such that the second connecting member will not wobble relative to the first connecting member.

In an example, the second connecting member includes a positioning portion, and the extension extends between the positioning portion and the coupling portion. Thus, the positioning portion can abut against the abutting portion of the first connecting member, such that the second connecting member will not wobble relative to the first connecting member.

In an example, the extension includes a first abutting face and a second abutting face opposite to the first abutting face. The first abutting face is connected to the groove and is configured to abut against the engaging portion. The second abutting face is connected to the positioning portion and is configured to abut against the abutting portion. Thus, when the extension is inserted through the hole of the first connecting member, the first abutting face and the second abutting face smoothly guide the engaging portion of the first connecting member to engage with the recess, and the abutting portion abuts against the positioning portion.

In an example, the limiting groove is recessed in the first abutting face and extends between the coupling portion and the positioning portion, such that the second connecting member forms an opening portion opposite to the extension. A displacement space is formed between the coupling portion and the positioning portion and intercommunicates with the opening portion. Thus, the limiting member can pivot about the pivotal axis defined by the pivotal end and can pivot in the displacement space relative to the second connecting member, thereby moving vertically in a direction towards the coupling portion or the positioning portion.

In an example, the limiting member includes a pivotal end and a pressing end opposite to the pivotal end. The pivotal end is pivotably connected to two opposed sidewalls of the limiting groove, such that the pressing end is pivotable about a pivotal axis defined by the pivotal end. Thus, the limiting member can pivot about the pivotal axis defined by the pivotal end and can pivot in the displacement space relative to the second connecting member, thereby moving vertically in a direction towards the coupling portion or the positioning portion.

In an example, the pivotal end includes a pressing portion and the limiting portion. The limiting portion is located between the pressing portion and the pressing end. The pressing portion extends into or retracts from the limiting groove in response to pivotal movement of the pivotal end of the limiting member. Thus, the limiting portion can position the engaging portion in the recess to avoid disengagement of the first connecting member.

In an example, the pressing portion includes a level difference towards the limiting portion to form a stop face, and the stop face faces the opening of the recess. Thus, the stop face can shield a portion of the opening of recess to thereby position the engaging portion.

In an example, the gripping member is located on a side of the second connecting member remote to the extension and is adjacent to the limiting member. Thus, a user can grip the gripping member with four fingers and can easily press the pressing end extending beyond the opening portion with the thumb, improving the use convenience.

The present invention will become clearer in light of the following detailed description of illustrative embodiments of this invention described in connection with the drawings.

### BRIEF DESCRIPTION OF THE DRAWINGS

FIG. 1 is an exploded, perspective view of a quick-release mechanism of an embodiment according to the present invention.
FIG. 2 is a cross sectional view taken along section line A-A of FIG. 1.
FIG. 3 is a cross sectional view of the quick-release mechanism according to the present invention after assembly.
FIG. 4 is a cross sectional view illustrating detachment of a first connecting member and a second connecting member of the quick-release mechanism according to the present invention.
FIG. 5 is a diagrammatic view illustrating application of the quick-release mechanism according to the present invention on a wheelchair and an auxiliary wheel.

### DETAILED DESCRIPTION OF THE INVENTION

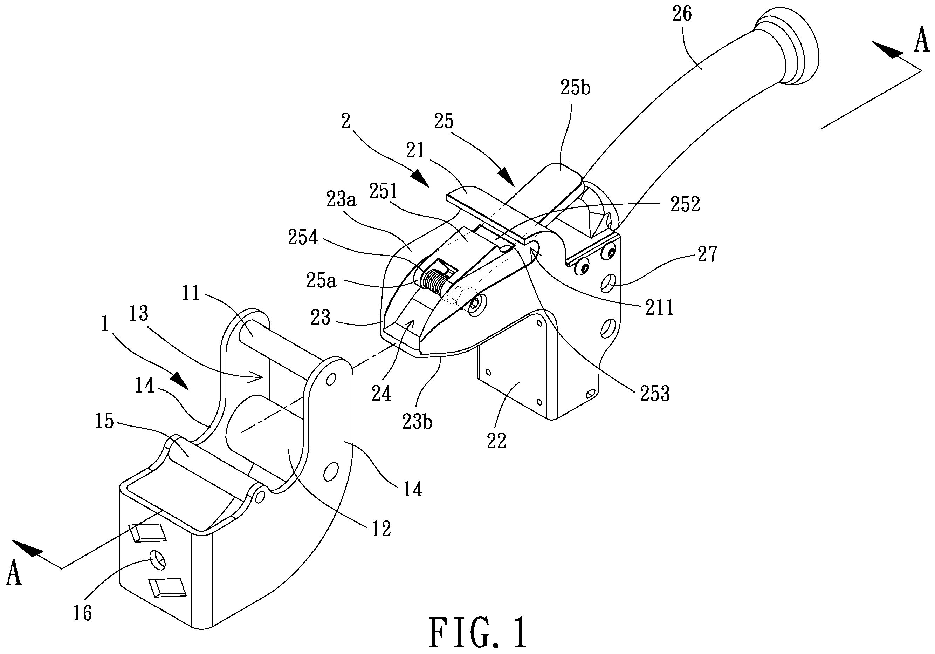

With reference to FIG. 1, a quick-release mechanism of an embodiment according to the present invention comprises a first connecting member 1 and a second connecting member 2. The first and second connecting members 1 and 2 can be detachably engaged with each other and can be respectively mounted to two objects requiring detachable coupling therebetween.

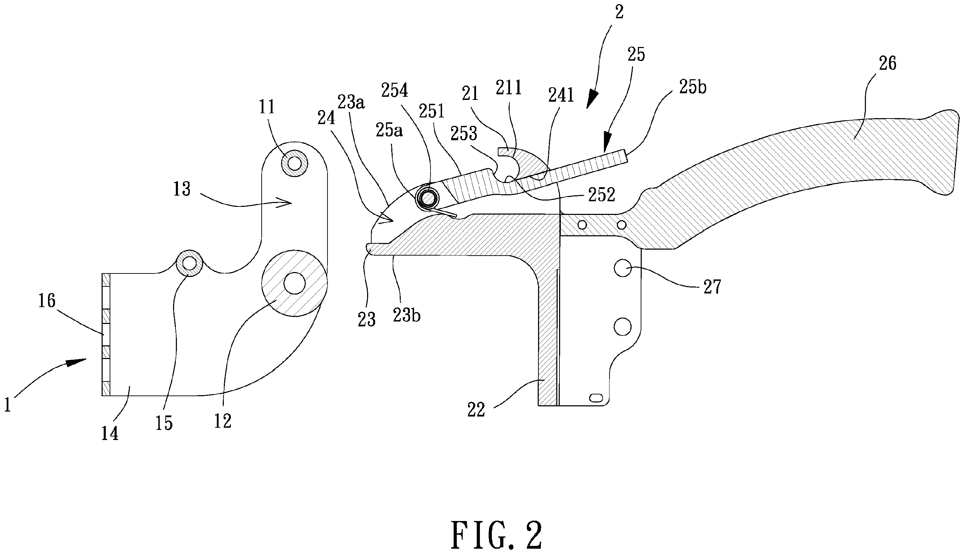

With reference to FIGS. 1 and 2, the first connecting member 1 including an engaging portion 11 and an abutting portion 12. A hole 13 is defined between the engaging portion 11 and the abutting portion 12. The second connecting member 2 can extend through and engage with the hole 13, and the engaging portion 11 and the abutting portion 12 together position the second connecting member 2. Specifically, the first connecting member 1 includes two sideboards 14 opposite to each other. The engaging portion 11 and the abutting portion 12 are disposed between the two sideboards 14 and are spaced from each other to form the hole 13. In this embodiment, each of the engaging portion 11 and the abutting portion 12 is pivotably mounted between the two sideboards 14, such that each of the engaging portion 11 and the abutting portion 12 can pivot relative to the two sideboards 14 independently. Thus, the insertion of the second connecting member 2 can be guided, improving the smoothness of inserting the second connecting member 2 into the hole 13 of the first connecting member 1.

The first connecting member 1 further includes an auxiliary abutting portion 15 adjacent to the abutting portion 12. When the second connecting member 2 is inserted through the hole 13, the auxiliary abutting portion 15 and the abutting portion 12 together abut against the second connecting member 2, improving the engaging stability of the second connecting member 2. Furthermore, the auxiliary abutting portion 15 can be pivotably connected between the two sideboards 14, such that the auxiliary abutting portion 15 can pivot relative to the two sideboards 14 to improve the smoothness of inserting the second connecting member 2 into the hole 13 of the first connecting member 1. The first connecting member 1 further includes a first connecting portion 16 configured to connect the first connecting member 1 to one of two objects requiring detachable coupling therebetween. The first connecting portion 16 can be located at a bottom between the two sideboards 14 or below the auxiliary abutting portion 15. The first connecting portion 16 can be in the form of a locking hole, an engaging groove, or a welding portion, depending on the object to be mounted to thereby permit installation of the first connecting member 1 to the object, which is not limited in the invention. In this embodiment, the first connecting portion 16 is preferably located at an end of the first connecting member 1 remote to the hole 13, avoiding hindrance to insertion of the second connecting member 2.

The second connecting member 2 includes a coupling portion 21 and a positioning portion 22 opposite to the coupling portion 21. The coupling portion 21 includes a recess 211. An extension 23 is disposed between the positioning portion 22 and the coupling portion 21 and projects towards an opening of the recess 211. Thus, the extension 23 of the second connecting member 2 can extend through the hole 13 of the first connecting member 1 to engage the recess 211 with the engaging portion 11 of the first connecting member 1. Furthermore, the positioning portion 22 can abut against the abutting portion 12 of the first connecting member 1, such that the second connecting member 2 will not wobble relative to the first connecting member 1.

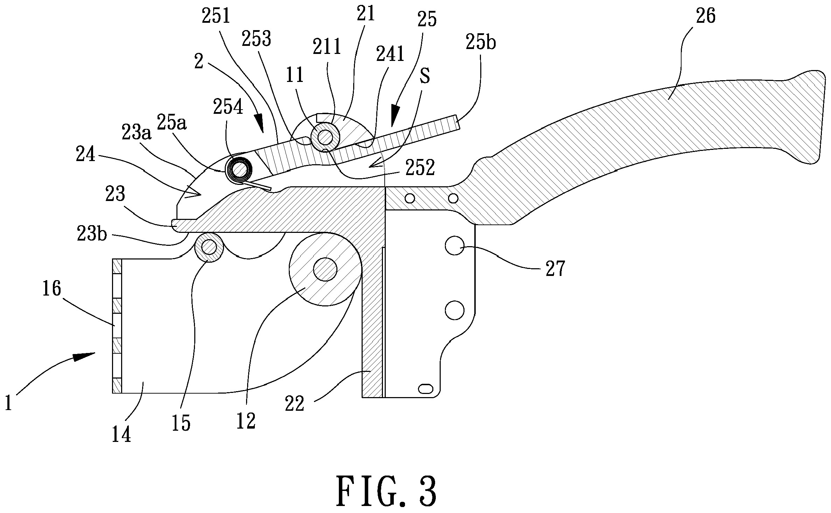

With reference to FIGS. 1 and 3, the extension 23 includes a first abutting face 23a and a second abutting face 23b opposite to the first abutting face 23a. The first abutting face 23a is connected to the recess 211 and is configured to abut against the engaging portion 11. The second abutting face 23b is connected to the positioning portion 22 and is configured to abut against the abutting portion 12. Thus, when the extension 23 is inserted through the hole 13, the first abutting face 23a and the second abutting face 23b smoothly guide the engaging portion 11 of the first connecting member 1 to engage with the recess 211, and the abutting portion 12 abuts against the positioning portion 22. In this embodiment, the second connecting member 2 includes a limiting groove 24 that can be recessed in the first abutting face 23a. Preferably, the limiting groove 24 extends from the extension 23 and extends between the coupling portion 21 and the positioning portion 22, such that the second connecting member 2 forms an opening portion 241 opposite to the extension 23. Namely, the limiting groove 24 forms a displacement space S between the coupling portion 21 and the positioning portion 22, and the displacement space S intercommunicates with the opening portion 241.

The second connecting member 2 further includes a limiting member 25 located in the limiting groove 24 and extending through the displacement space S. Specifically, the limiting member 25 includes a pivotal end 25a and a pressing end 25b opposite to the pivotal end 25a. The pivotal end 25a is pivotably connected to two opposed sidewalls of the limiting groove 24. The pressing end 25b extends beyond the opening portion 241. The pivotal end 25a and the pressing end 25b are located on two sides of the displacement space S. Thus, the pressing end 25b is pivotable about a pivotal axis defined by the pivotal end 25a and is pivotable in the displacement space S relative to the second connecting member 2. Namely, the pressing end 25b of the limiting member 25 can move vertically in a direction towards the coupling portion 21 or the positioning portion 22.

The pivotal end 25a includes a pressing portion 251 and a limiting portion 252. The limiting portion 252 is located between the pressing portion 251 and the pressing end 25b. The pressing portion 251 can extend into or retract from the limiting groove 24 in response to vertical displacement of the limiting member 25, moving the limiting portion 252 towards or away from the coupling portion 21. Furthermore, the limiting portion 252 can be aligned with the recess 211 of the coupling portion 21 to position the engaging portion 11 in the recess 211, avoiding disengagement of the first connecting member 1. For example, the limiting member 25 can include a stop face 253. In this embodiment, the pressing portion 251 includes a level difference towards the limiting portion 252 to form a stop face 253, such that the stop face 253 faces the opening of the recess 211. Thus, when the limiting portion 252 moves towards the coupling portion 21, the stop face 253 can shield a portion of the opening of recess 211 to thereby position the engaging portion 11.

An elastic returning member 254 can be pivotably connected to the pivotal end 25a and can be in the form of a torsion spring. Two ends of the elastic returning member 254 abut against the limiting groove 24 and the limiting member 25, respectively. Thus, the limiting member 25 can be pressed and return to proceed with displacement, moving the limiting portion 252 of the limiting member 25 away from or towards the recess 211. Furthermore, the second connecting member 2 can include a gripping member 26 located on a side of the second connecting member 2 remote to the extension 23 and preferably adjacent to the pressing end 25b of the limiting member 25. For example, the gripping member 26 can be in the form of a handle to permit a user to grip the handle with four fingers and can press the pressing end 25b extending beyond the opening portion 241 with the thumb, improving use convenience.

The second connecting member 2 can include a second connecting portion 27 for connecting the second connecting member 2 to another of the two objects requiring detachable coupling therebetween. The position and type of the second connecting portion 27 can be set according to the object, which is not limited in the invention. In this embodiment, the second connecting member 27 is preferably located on a side of the second connecting member 2 remote to the extension 23, avoiding hindrance to the insertion of the second connecting member 2.

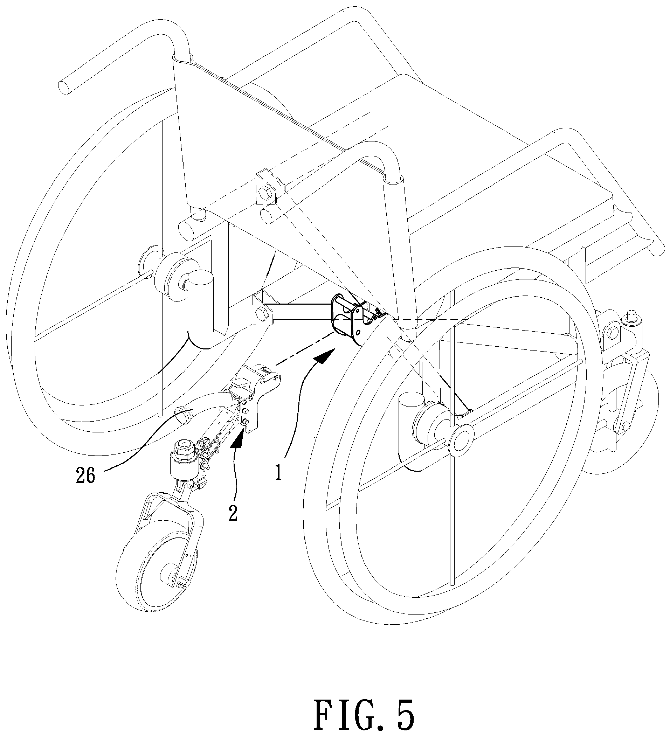

With reference to FIGS. 3-5, the quick-release mechanism according to the present invention can be installed on any two objects requiring detachable coupling therebetween, such as a wheelchair and its auxiliary wheel, a bicycle frame and a basket, etc. The present invention is not limited in this regard. The quick-release mechanism according to the present invention will be described hereinafter by way of an example of a wheelchair and its auxiliary wheel. According to the above structure, the first connecting member 1 is mounted to a frame of the wheelchair, and the second connecting member 2 is mounted to the auxiliary wheel of the wheelchair. When the extension 23 of the second connecting member 2 extends through the hole 13 of the first connecting member 1, the first and second abutting faces 23a and 23b of the extension 23 abut against the engaging portion 11 and the abutting portion 12 of the first connecting member 1, respectively. The first abutting face 23a smoothly guides the engaging portion 11 of the first connecting member 1 to couple with the recess 211, and the abutting portion 12 abuts against the positioning portion 22. Thus, the second connecting member 2 can reliably engage with the hole 13 without wobbling.

When the engaging portion 11 of the first connecting member 1 passes through the limiting groove 24 of the first abutting face 23a, the engaging portion 11 presses against the pressing portion 251 of the limiting member 25 to retract the limiting member 25 into the limiting groove 24. When the engaging portion 11 couples with the recess 211, the pressing portion 251 is not pressed by the engaging portion 11 and, thus, elastically returns to shield a portion of the opening of the recess 211 by the stop face 253, avoiding disengagement of the engaging portion 11 of the first connecting member 1. Thus, the auxiliary wheel can be securely connected to the wheelchair.

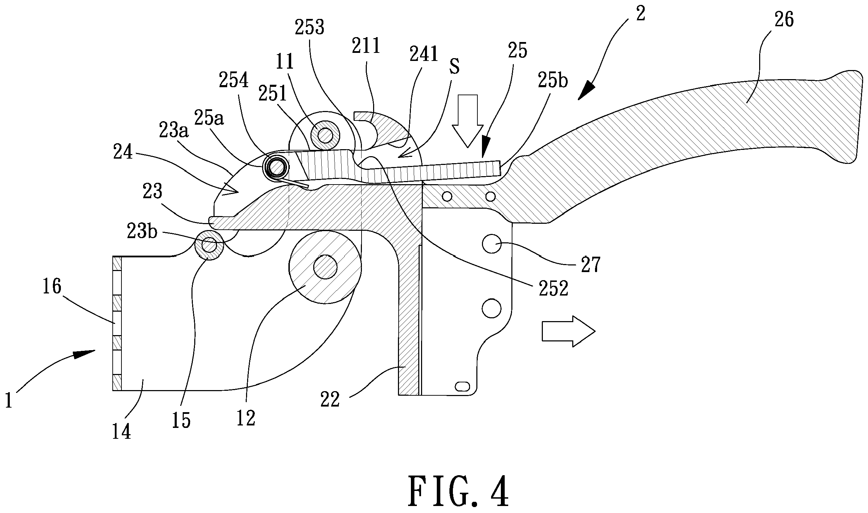

With reference to FIG. 4, when it is desired to detach the second connecting member 2 from the first connecting member 1, the pressing end 25b of the limiting member 25 can be pressed to retract the limiting member 25 into the limiting groove 24. At this time, the opening of the recess 211 is not shielded by the stop face 253, such that the engaging portion 11 of the first connecting member 1 can be disengaged from the recess 211, permitting the second connecting member 2 to disengage from the hole 13 of the first connecting member 1. Thus, the auxiliary wheel can be detached from the wheelchair.

In view of the foregoing, the quick-release mechanism according to the present invention includes the first and second connecting members 1 and 2 respectively mounted to two objects requiring detachable coupling. The first and second connecting members 1 and 2 couple with each other. The detachment of the first and second connecting members 1 and 2 can be controlled by pressing and elastic returning of the limiting member 25 of the second connecting member 2. Coupling and detaching of the first and second connecting members 1 and 2 can be simply achieved without additional locking tools, improving use convenience.

## Claims

1. A quick-release mechanism **characterized in** comprising:
a first connecting member (1) including an engaging portion (11) and a hole (13); and
a second connecting member (2) including a coupling portion (21) and an extension (23), wherein the extension (23) extends through the hole (13) of the first connecting member (1) to engage the coupling portion (21) with the engaging portion (11), wherein the extension (23) includes a limiting groove (24), wherein the second connecting member (2) further includes a limiting member (25) having a limiting portion (252), wherein the limiting member (25) is extendible into or retractable from the limiting groove (24) to move the limiting portion (252) towards or away from the coupling portion (21).

2. The quick-release mechanism as claimed in claim 1, **characterized in that** the first connecting member (1) includes an abutting portion (12), wherein the hole (13) is defined between the engaging portion (11) and the abutting portion (12).

3. The quick-release mechanism as claimed in claim 2, **characterized in that** the first connecting member (1) further includes an auxiliary abutting portion (15) adjacent to the abutting portion (12), wherein the auxiliary abutting portion (15) and the abutting portion (12) together abut against the second connecting member (2).

4. The quick-release mechanism as claimed in claim 1, **characterized in that** the engaging portion (11) and the abutting portion (12) are pivotably connected to the first connecting member (1).

5. The quick-release mechanism as claimed in claim 1, **characterized in that** the coupling portion (21) includes a recess (211) having an opening facing an extending direction of the extension (23).

6. The quick-release mechanism as claimed in claim 1, **characterized in that** the second connecting member (2) includes a positioning portion (22), wherein the extension (23) extends between the positioning portion (22) and the coupling portion (21).

7. The quick-release mechanism as claimed in claim 6, **characterized in that** the extension (23) includes a first abutting face (23a) and a second abutting face (23b) opposite to the first abutting face (23a), wherein the first abutting face (23a) is connected to the recess (211) and is configured to abut against the engaging portion (11), and wherein the second abutting face (23b) is connected to the positioning portion (22) and is configured to abut against the abutting portion (12).

8. The quick-release mechanism as claimed in claim 7, **characterized in that** the limiting groove (24) is recessed in the first abutting face (23a) and extends between the coupling portion (21) and the positioning portion (22), wherein the second connecting member (2) forms an opening portion (241) opposite to the extension (23), and wherein a displacement space (S) is formed between the coupling portion (21) and the positioning portion (22) and intercommunicates with the opening portion (241).

9. The quick-release mechanism as claimed in claim 5, **characterized in that** the limiting member (25) includes a pivotal end (25a) and a pressing end (25b) opposite to the pivotal end (25a), wherein the pivotal end (25a) is pivotably connected to two opposed sidewalls of the limiting groove (24), and wherein the pressing end (25b) is pivotable about a pivotal axis defined by the pivotal end (25a).

10. The quick-release mechanism as claimed in claim 9, **characterized in that** the pivotal end (25a) includes a pressing portion (251) and the limiting portion (252), wherein the limiting portion (252) is located between the pressing portion (251) and the pressing end (25b), and wherein the pressing portion (251) extends into or retracts from the limiting groove (24) in response to pivotal movement of the pivotal end (25a) of the limiting member (25).

11. The quick-release mechanism as claimed in claim 10, **characterized in that** the pressing portion (251) includes a level difference towards the limiting portion (252) to form a stop face (253), wherein the stop face (253) faces the opening of the recess (211).

12. The quick-release mechanism as claimed in any one of claims 1-11, **characterized in** further comprising a gripping member (26), wherein the gripping member (26) is located on a side of the second connecting member (2) remote to the extension (23) and is adjacent to the limiting member (25).
